# DEMANDE DE BREVET EUROPEEN

(11) **EP 3 671 376 A1**
(43) Date de publication de la demande: **24.06.2020**
(21) Numéro de dépôt: 19216145.3
(22) Date de dépôt: 13.12.2019
(51) Int. Cl.: G05B 15/02, G05B 23/02

(54) **PROCEDE DE LOCALISATION DE CAPTEURS**

(30) Priorité: 17.12.2018 FR 1873114
(71) Demandeur: ORANGE, 75015 Paris (FR)
(72) Inventeur: CUMIN, Julien, 92326 CHÂTILLON CEDEX (FR); CIBAUD, David, 92326 CHÂTILLON CEDEX (FR)
(74) Mandataire: Plasseraud IP

(57) **Abrégé**

Procédé de localisation de capteurs situés dans une zone géographique constituée d'au moins une sous-zone de référence, lesdits capteurs comprenant :
- au moins un premier capteur, chaque premier capteur étant associé à une sous-zone de référence dans laquelle il est situé ; et
- au moins un deuxième capteur, chaque deuxième capteur n'étant associé à aucune sous-zone ;
le procédé comprenant :
a. regrouper lesdits capteurs en une pluralité de groupes à partir de données issues desdits capteurs ;
b. pour au moins un groupe de capteurs, déterminer si le groupe comprend un premier capteur ;
c. si le groupe comprend un premier capteur, associer chaque deuxième capteur du groupe à la sous-zone correspondant audit premier capteur.

## Description

La présente invention concerne le domaine de la localisation d'objets, en particulier d'objets fixes, dans un environnement (tel qu'une maison, une pièce d'une maison, un appartement, un bureau, etc.), en particulier dans un environnement intelligent.

Un environnement intelligent comprend un réseau de capteurs, qui fournissent des informations relatives à des grandeurs, par exemple des grandeurs physiques (luminosité ambiante, température, consommation électrique, etc.), un état (mouvement, présence d'un individu dans une pièce), et éventuellement d'actionneurs aptes à exécuter des tâches en fonction des informations fournies par les capteurs (commander le thermostat pour augmenter la température d'une pièce, commander à un interrupteur d'éteindre une lumière, etc.).

Pour certaines applications, il est important de connaître la localisation des capteurs ou des actionneurs du réseau d'objets. Par exemple, dans le cadre d'un bâtiment d'entreprise, une connaissance de la position des capteurs est essentielle pour des services tels que la gestion de la répartition de la consommation énergétique selon les différentes pièces du bâtiment, l'occupation des salles de réunion, etc. Dans le cadre de la domotique, les informations de localisation des capteurs permettent une fiabilisation de certains services, tels que la reconnaissance d'activités, la détection de présence d'un individu, la détection d'intrusion, etc.

Dans les solutions existantes, les informations de localisation des capteurs et/ou des actionneurs sont obtenues à partir de données fournies par des individus, par exemple un professionnel habilité ayant effectué ou supervisé l'installation des objets dans le réseau, ou l'utilisateur lui-même. De telles solutions peuvent s'avérer onéreuses (dans le premier cas notamment), et très chronophages, le nombre d'objets pouvant être très important et la surface à couvrir pouvant être très grande. De plus, à chaque changement de configuration du réseau (notamment lorsqu'un nouveau nœud du réseau est installé, ou lorsqu'un nœud existant est déplacé), il est nécessaire d'actualiser ces informations de localisation. Une telle actualisation est fastidieuse et génératrice d'erreurs, et ce d'autant plus que le nombre d'objets connectés est important, et nécessite un suivi minutieux que l'utilisateur n'a pas forcément l'envie ou le temps de réaliser.

Les solutions développées pour le suivi d'objets mobiles pourraient être adaptées à la localisation d'objets connectés et fixes. Toutefois, les solutions actuelles pour effectuer un tel suivi reposent généralement sur l'utilisation de balises (ou « beacons », en anglais). Par exemple, dans le brevet US 6529164 B1, il est proposé un système de localisation de personnes équipées d'émetteurs-récepteurs à l'intérieur d'un bâtiment. Pour cela, des balises sont placées dans le bâtiment, et transmettent par intermittence des codes d'identification uniques. Les émetteurs-récepteurs reçoivent les transmissions des balises à proximité, déterminent la force du signal de ces transmissions et transmettent les données associées à un serveur. Le serveur utilise ces données pour déterminer l'emplacement de chaque émetteur-récepteur et utilise les temps de trajet prévus entre des emplacements spécifiques pour résoudre les ambiguïtés.

Cependant, des telles solutions nécessitent d'installer, en plus des objets qu'on souhaite localiser, des balises au sein de la zone que l'on souhaite contrôler. Cette installation représente un coût de main d'œuvre, de paramétrage et de maintenance non négligeable, d'autant plus dans des grands bâtiments comme des bureaux d'entreprise. De plus, ces solutions reposent sur des mesures de puissance du signal reçue dans le bâtiment tout entier, ce qui est également coûteux. Par ailleurs, pour utiliser ces solutions, il est nécessaire de connaître la localisation des balises à l'intérieur du bâtiment et de mettre à jour les informations de localisation en cas d'ajout, de suppression ou de déplacement d'une balise. Ces informations de localisation sont généralement obtenues à partir de données fournies par des individus (professionnel habilité ou utilisateur), ce qui renvoie à la problématique définie ci-dessus.

Il existe donc un besoin pour une solution efficace d'acquisition automatique de la position physique des nœuds (i.e. des capteurs et/ou des actionneurs) dans un réseau de capteurs. La présente invention vient améliorer la situation.

### Exposé de l'invention

La présente invention vise un procédé, mis en œuvre par des moyens informatiques, de localisation de capteurs situés dans une zone géographique, ladite zone géographique étant constituée d'au moins une sous-zone de référence, lesdits capteurs comprenant :
- au moins un premier capteur, chaque premier capteur parmi lesdits au moins un premier capteur étant respectivement associé à une sous-zone parmi lesdites au moins une sous-zone de référence dans laquelle il est situé ; et
- au moins un deuxième capteur, chaque deuxième capteur parmi lesdits au moins un deuxième capteur n'étant associé à aucune sous-zone ;
le procédé comprenant :
a. regrouper lesdits capteurs en une pluralité de groupes à partir de données issues desdits capteurs par un partitionnement desdites données ;
b. pour au moins un groupe de capteurs parmi la pluralité de groupes, déterminer si le groupe comprend ou non un premier capteur ; et
c. si le groupe comprend un premier capteur, associer chaque deuxième capteur du groupe à la sous-zone à laquelle le premier capteur est associé.

Par « zone géographique » on entend une zone spatiale, qui correspond à un environnement particulier, comme une maison, un immeuble, un appartement, un bureau, etc. Par « sous-zone » on entend une région spatiale incluse dans la zone géographique, par exemple une pièce ou un ensemble de pièces. Par exemple, les sous-zones forment une partition de la zone géographique. Par « sous-zone de référence », il est entendu que les sous-zones sont prédéfinies ou prédéterminées, en fonction de l'application souhaitée (par exemple, en fonction de la précision souhaitée, une sous-zone peut correspondre à un étage entier, ou à une unique pièce). Par exemple, les sous-zones peuvent être prédéfinies par l'utilisateur, par l'installateur du réseau, par un intervenant en charge de mettre en œuvre une solution technique (par exemple une optimisation de consommation d'électricité) dans la zone géographique.

Il est supposé que la localisation (i.e. la sous-zone géographique dans laquelle un capteur est situé) de certains capteurs est connue (par exemple, elle a été renseignée par l'installateur du réseau, par un utilisateur, ou par une entité externe), tandis que la localisation de certains capteurs est inconnue. Les « premiers capteurs » désignent ainsi les capteurs dont la localisation est connue, et les « deuxièmes capteurs » désignent les capteurs dont la localisation est inconnue.

Par « partitionnement de données » il est entendu toute technique d'analyse de données visant à séparer un ensemble de données en « paquets » homogènes en ce sens que les données de chaque paquet partagent des caractéristiques communes, établis à partir de critères de proximité. Par exemple, une telle technique d'analyse de données peut comprendre l'application d'un algorithme de classification non supervisée.

À partir des données issues des capteurs, un groupement des capteurs est effectué, les informations de localisation qui sont connues sont propagées aux autres capteurs d'un même groupe.

Dans un mode de réalisation, l'étape c peut en outre comprendre : si le groupe ne comprend aucun premier capteur, émettre un signal relatif à une sous-zone dans laquelle se situe un capteur du groupe de capteurs.

Par exemple, si dans un groupe il n'y a aucun capteur dont la localisation est connue, il est possible d'envoyer un signal à destination d'une entité externe pour demander une information de localisation relative à l'un des capteurs du groupe (par exemple, une commande invitant un utilisateur à entrer la localisation d'un capteur donné). Dans ce cas, le procédé peut en outre comprendre :
- recevoir, consécutivement à l'émission du signal, une donnée relative à une sous-zone ; et
- associer chaque capteur du groupe à la sous-zone correspondant à la donnée reçue.

Ainsi, en réponse au signal émis, une information de localisation peut être reçue pour un capteur du groupe, et propagée à tous les capteurs du groupe.

Dans un mode de réalisation, le procédé peut en outre comprendre :
d. générer un signal de commande à destination d'un dispositif électronique en fonction d'au moins un capteur et de la sous-zone qui lui est associée.

Les informations de localisation déterminées peuvent être utilisées pour commander un appareil. Par exemple, dans un contexte d'optimisation de la consommation d'énergie, les informations de localisation peuvent être utilisées pour contrôler la température et/ou la luminosité de différentes sous-zones.

Dans un ou plusieurs modes de réalisation, pour un sous-ensemble de données parmi lesdites données issues desdits capteurs, chaque donnée du sous-ensemble est respectivement associée à un temps d'événement, dans lequel le partitionnement desdites données est fonction desdits temps d'événement.

Ainsi, la méthode de partitionnement peut déterminer des groupes en fonction de corrélations temporelles, qui permettent de déduire des corrélations spatiales entre les capteurs.

Dans un mode de réalisation, au moins une donnée du sous-ensemble de données peut être issue d'au moins un premier capteur parmi lesdits premiers capteurs. Le procédé peut en outre comprendre :
- sélectionner un capteur de référence parmi lesdits au moins un premier capteur ;
- déterminer des différences entre des temps d'événement associés à des capteurs autres que le capteur de référence et un temps d'événement associé au capteur de référence ;
dans lequel le regroupement des capteurs est effectué en fonction des différences déterminées.

Dans un ou plusieurs modes de réalisation, le partitionnement desdites données est un algorithme de type K-moyennes.

Dans un ou plusieurs modes de réalisation, le regroupement des capteurs peut comprendre :
- regrouper lesdits premiers capteurs en une pluralité de premiers groupes, de sorte que tous les premiers capteurs appartenant à un même premier groupe parmi la pluralité de premiers groupes sont associés à une même sous-zone et que deux premiers capteurs parmi lesdits premiers capteurs associés à deux sous-zones respectives différentes n'appartiennent pas à un même premier groupe ;
- en fonction des données issues des capteurs, ajouter un deuxième capteur à un premier groupe parmi lesdits premiers groupes, ou à un groupe créé ne comprenant aucun premier capteur.

Ainsi, à la fin de l'étape a de regroupement, deux premiers capteurs (i.e. dont la localisation est connue) d'une même sous-zone sont forcément dans un même groupe, et deux premiers capteurs de deux sous-zones différentes sont forcément dans deux groupes différents. Cela augmente la robustesse du procédé global. L'étape préalable de regroupement des premiers capteurs peut être effectuée par exemple en attribuant des distances particulières entre les premiers capteurs : une distance nulle peut être attribuée entre deux premiers capteurs d'une même sous-zone, et une distance très grande peut être attribuée entre deux premiers capteurs de deux sous-zones différentes.

Dans un ou plusieurs modes de réalisation, les capteurs de la zone géographique peuvent appartenir à un même réseau local, et les étapes a à c peuvent être mises en œuvre à chaque détection d'ajout d'un nouveau capteur dans le réseau local et/ou de suppression d'un capteur du réseau local pour lequel des données ont été précédemment reçues.

Ainsi, en cas de changement de topographie du réseau, les informations de localisation sont avantageusement mises à jour.

Dans un ou plusieurs modes de réalisation, le procédé peut en outre comprendre :
- recevoir un signal de validation ou de rectification d'une appartenance d'un capteur à une sous-zone ;
- mettre à jour les groupes de capteurs et les sous-zones associées aux groupes de capteurs en fonction du signal de validation ou de rectification reçu.

Un tel signal de validation est reçu depuis une entité externe, par exemple un utilisateur qui valide manuellement qu'un capteur est bien situé dans telle sous-zone, ou qui rectifie la sous-zone détectée en cas d'erreur. Cela permet de corriger d'éventuelles erreurs lors du regroupement.

Dans un ou plusieurs modes de réalisation, les données reçues peuvent être associées à des capteurs mesurant des paramètres physiques différents.

Par exemple, lorsque les données sont regroupées en fonction du temps de survenue d'un événement sur un capteur, il n'est pas nécessaire que les différents capteurs correspondent à un même paramètre physique. Cela permet avantageusement d'exploiter des données issues de capteurs très différents et très hétérogènes.

La présente invention vise aussi un dispositif de localisation de capteurs situés dans une zone géographique, ladite zone géographique étant constituée d'au moins une sous-zone de référence, lesdits capteurs comprenant :
- au moins un premier capteur, chaque premier capteur parmi lesdits au moins un premier capteur étant respectivement associé à une sous-zone parmi lesdites au moins une sous-zone de référence dans laquelle il est situé ; et
- au moins un deuxième capteur, chaque deuxième capteur parmi lesdits au moins un deuxième capteur n'étant associé à aucune sous-zone ;
le dispositif comprenant un circuit configuré pour mettre en œuvre un des procédés décrits ci-dessus.

Par exemple, le dispositif peut être intégré à un dispositif électronique de fourniture d'accès à Internet.

La présente invention vise aussi un produit programme informatique comportant des instructions pour la mise en œuvre un des procédés décrits ci-dessus, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

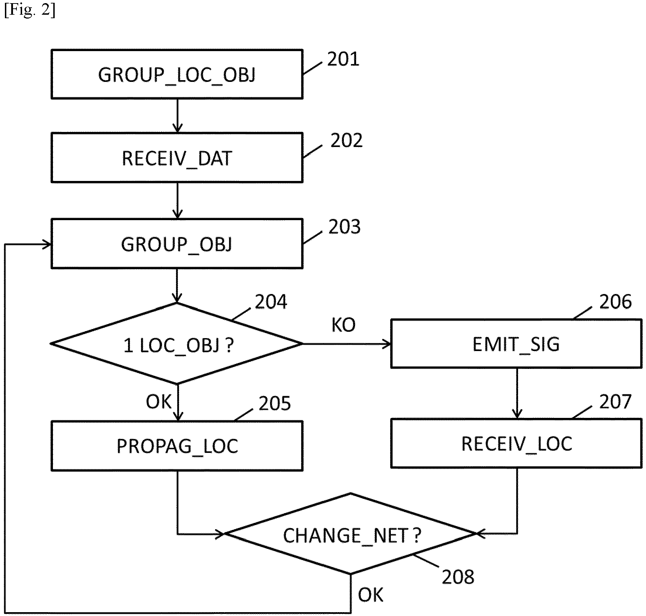

La figure 2 décrite en détails ci-après, peut former l'ordinogramme de l'algorithme général d'un tel programme informatique.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, pour exécuter tout ou partie du procédé décrit ci-avant.

### Brève description des dessins

D'autres caractéristiques, détails et avantages de l'invention apparaîtront à la lecture de la description détaillée ci-après. Celle-ci est purement illustrative et doit être lue en regard des dessins annexés sur lesquels :
**Fig. l**

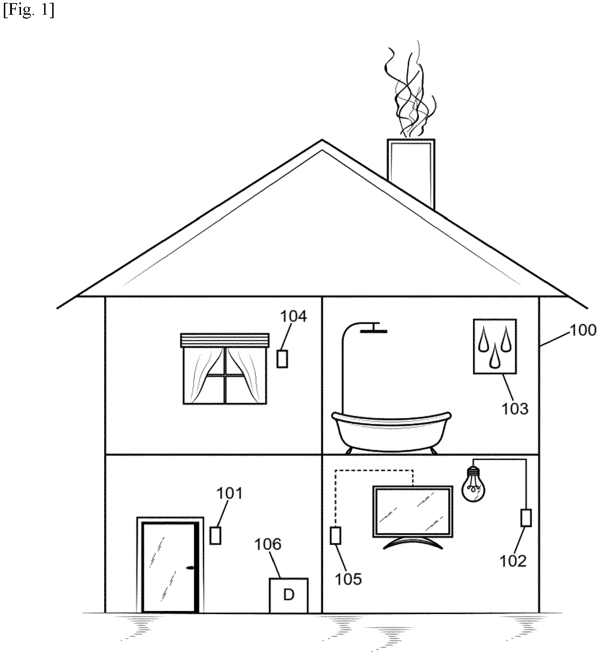

   [Fig. 1] illustre une zone géographique instrumentée par un réseau de capteurs dans laquelle peut être mis en œuvre un procédé de localisation de capteurs, selon un mode de réalisation particulier ;
**Fig. 2**
   [Fig. 2] est un ordinogramme d'une détermination d'une localisation d'un capteur dans un mode de réalisation particulier ;
**Fig. 3a**

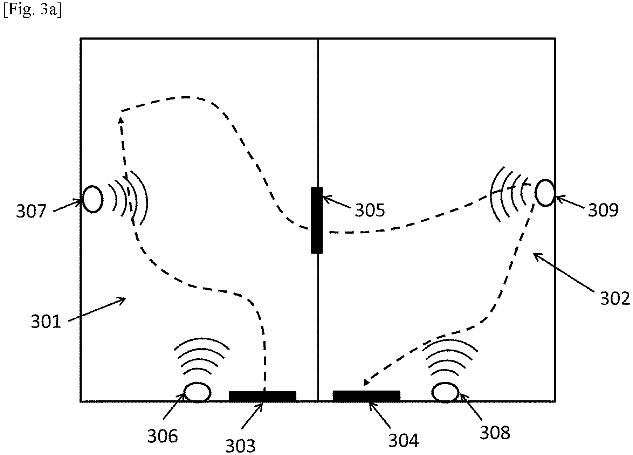

   [Fig. 3a] représente un regroupement de capteurs selon un mode de réalisation particulier ;
**Fig. 3b**

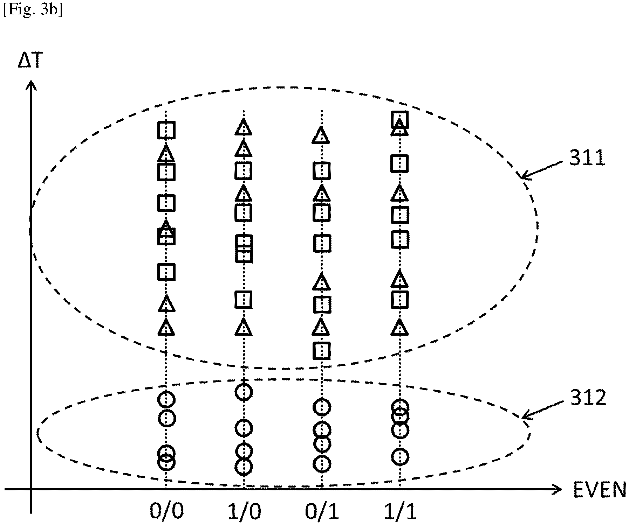

   [Fig. 3b] représente un regroupement de capteurs selon un mode de réalisation particulier ;
**Fig. 4**

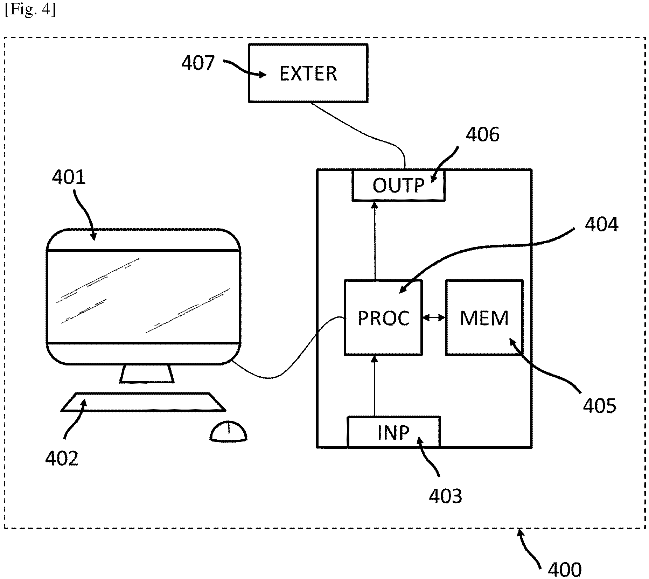

   [Fig. 4] représente un exemple de dispositif de localisation d'un capteur selon un mode de réalisation particulier.

### Description des modes de réalisation

La figure 1 illustre une zone géographique instrumentée par un réseau de capteurs dans laquelle peut être mis en œuvre un procédé de localisation de capteurs, selon un mode de réalisation particulier.

Dans l'exemple représenté en figure 1, une zone géographique 100 est représentée et correspond de manière non limitative à une maison équipée de capteurs domotiques. Bien entendu, la zone géographique peut correspondre à tout autre environnement équipé de capteurs, comme un ensemble de bureaux, un bureau individuel, un appartement, etc.

Des capteurs 102, 103, 104, 105, aptes à communiquer avec un dispositif 106 via un protocole de communication filaire et/ou sans fil, sont situés dans une zone géographique 100. Des capteurs peuvent aussi être placés à une distance inférieure à une distance prédéterminée de la zone géographique. Par exemple, sur la figure 1, un capteur (ou détecteur) d'ouverture de porte 101 peut être disposé près de la porte d'entrée, sur la façade extérieure de la maison 100. Selon d'autres exemples, des capteurs peuvent aussi être disposés dans le jardin, sur la terrasse, dans le garage, etc. La zone géographique 100 peut comprendre plusieurs sous-zones. Les sous-zones géographiques peuvent être prédéfinies selon un niveau de granularité souhaité. Par exemple, pour certaines applications, les sous-zones correspondent à différentes pièces d'une maison, d'un appartement ou d'un bureau. Pour d'autres applications, les sous-zones peuvent correspondre à des ensembles de pièces, ou aux différents étages d'un bâtiment.

Selon un mode de réalisation, certains capteurs 101, 102, 103, 104, 105 peuvent mesurer des paramètres physiques et envoyer des données relatives à ces paramètres physiques, comme une température, une consommation électrique, une consommation d'eau ou de gaz, une luminosité, un signal sonore, un mouvement, etc.

De manière alternative ou en complément, certains capteurs 101, 102, 103, 104, 105 peuvent fournir une information dite « bas niveau », c'est-à-dire une information simple et ne nécessitant pas de traitement informatique complexe. Typiquement, ces capteurs mesurent une grandeur physique et le résultat de la mesure peut être une variable binaire de type « OUI/NON » modélisant un événement, par exemple : le déclenchement d'un capteur de mouvement (« actionné/non actionné »), le déclenchement d'un capteur 101 d'un détecteur d'ouverture / de fermeture de porte, une action (allumage ou extinction) sur une ampoule détectée grâce à un capteur 102 dans un interrupteur connecté à l'ampoule ; une action (allumage ou extinction) sur un téléviseur détectée grâce à un capteur 105 relié à un téléviseur ; etc.

Selon un mode de réalisation, le dispositif 106 est équipé d'un module de communication comprenant un ou plusieurs récepteur(s) sans fil configuré(s) pour recevoir des données issues des différents capteurs 101, 102, 103, 104, 105.

Le dispositif 106 peut être situé dans ou en dehors de la zone géographique 100. En outre, le dispositif 106 peut être un dispositif indépendant, ou bien un dispositif intégré à un équipement informatique de la zone géographique 100. Par exemple, le dispositif 106 peut être intégré dans un dispositif électronique de fourniture d'accès à Internet, tel qu'une passerelle de service, parfois désignée sous le terme « box » pour une passerelle résidentielle.

Pour recevoir les données issues des capteurs 101, 102, 103, 104, 105, le dispositif 106 peut être équipé d'un circuit électronique de communication pour communiquer selon un protocole adapté à la technologie des objets connectés.

Un tel circuit électronique de communication peut par exemple être un circuit de communication PAN (pour « Personal Area Network » en anglais, ou réseau personnel en français), qui permet des communications sur des distances allant de quelques centimètres jusqu'à une dizaine de mètres selon la technologie utilisée. Par exemple, le circuit électronique de communication PAN peut utiliser une ou plusieurs technologies de communication parmi les technologies Wifi, Bluetooth, Infrarouge, NFC pour un réseau personnel sans fil (ou WPAN, pour « Wireless Personal Area Network » en anglais), ou Zigbee, Enocean, Z-Wave pour un réseau personnel sans fil à faible consommation énergétique (ou LPWPAN, pour « Low-Power Wireless Personal Area Network » en anglais).

Le circuit électronique de communication peut aussi utiliser un LPWAN (pour « Low-Power Wide-Area Network » en anglais, ou « réseau étendu à faible consommation énergétique » en français), qui permet des communications à longue portée, à un débit très faible. Ce type de réseau est particulièrement adapté aux applications M2M (pour « Machine to Machine » en anglais, ou communication entre machines en français) et à l'Internet des objets (ou IoT pour « Internet of Things » en anglais), qui sont généralement limités en termes de capacité de mémoire, de puissance de calcul et d'énergie. Par exemple, le circuit électronique peut utiliser un réseau parmi Sigfox, LTE-M, ou LoRaWAN.

Le dispositif 106 peut être apte à traiter les données reçues depuis les différents capteurs 101, 102, 103, 104, 105 pour en déduire leurs localisations à l'intérieur de la zone géographique 100, c'est-à-dire déterminer la sous-zone dans laquelle ils sont situés.

Il est supposé que tous les capteurs du réseau sont connectés au dispositif 106 sans considération du protocole utilisé. Il est aussi supposé que les capteurs 101, 102, 103, 104, 105 sont répartis en deux catégories : des capteurs dont la localisation (dans une sous-zone) n'est pas connue, et des capteurs dont la localisation dans une sous-zone est connue (par exemple, elle a été renseignée par l'installateur du réseau ou par l'utilisateur).

La figure 2 est un ordinogramme d'une détermination d'une localisation d'un capteur dans un mode de réalisation particulier.

Dans un mode de réalisation, les capteurs dont la localisation est connue sont répartis (étape 201) en différents groupes selon leur localisation dans une sous-zone. Par exemple, tous les capteurs situés dans la sous-zone 1 sont affectés à un groupe 1, tous les capteurs situés dans la sous-zone 2 sont affectés à un groupe 2, etc. Tous les capteurs d'un groupe ont la même localisation, et deux capteurs ayant des localisations différentes appartiennent à deux groupes différents.

Dans un ou plusieurs modes de réalisations, la méthode de détermination de localisation d'un capteur comprend une réception de données issues des différents capteurs. Il est à noter que cette réception est optionnelle. En effet, il est aussi possible de déterminer des informations sur la localisation de capteurs à partir du fait qu'aucune donnée n'est reçue, pour un groupe de capteurs, pendant un intervalle de temps. Par exemple, si le dispositif reçoit une information d'un système externe indiquant qu'il y a une coupure de réseau ou une coupure de courant dans une ou plusieurs sous-zones, et que parallèlement le dispositif ne reçoit aucune donnée d'un sous-ensemble de capteurs pendant un certain temps, cela peut indiquer que les capteurs de ce sous-ensemble sont situés dans la ou les sous-zones concernées par la coupure. A l'inverse, recevoir des données de la part de capteurs pendant la coupure indique que ces capteurs ne sont pas situés dans la ou les sous-zones concernées par la coupure.

Les données reçues à l'étape 202 peuvent par exemple être des variables binaires ou des données relatives à des mesures de paramètres physiques, comme mentionné plus haut.

A l'étape 203, une méthode (ou algorithme) de partitionnement de données est mise en œuvre à partir des données reçues (ou d'informations déduites du fait de la non-réception de données). L'analyse de ces données peut être faite pendant une période temporelle plus ou moins longue, et permet de déterminer des corrélations entre les capteurs. En utilisant une métrique adaptée, ces corrélations permettent d'établir des corrélations spatiales entre les capteurs. L'algorithme de partitionnement de données peut ainsi regrouper des capteurs spatialement proches dans un même groupe. Selon un ou plusieurs modes de réalisation, l'algorithme de partitionnement peut être un algorithme d'apprentissage non-supervisé, par exemple un algorithme de type K-moyennes (ou « K-means », en anglais), un algorithme de partitionnement spatial basé sur la densité d'applications avec bruit, ou DBSCAN (pour « density-based spatial clustering of applications with noise » en anglais), une méthode de regroupement hiérarchique, etc. Dans un ou plusieurs modes de réalisation, l'algorithme de partitionnement peut être probabiliste (par exemple grâce à un algorithme espérance-maximisation, ou EM pour « expectation-maximization » en anglais), et renvoyer en sortie les groupes ainsi que la(les) probabilité(s) qu'un capteur appartienne à un ou plusieurs groupes. Si, pour un capteur, toutes les probabilités sont inférieures à un seuil prédéfini, il peut être par exemple décidé de n'affecter le capteur à aucun groupe et d'attendre des données supplémentaires pour affiner le groupement, ou d'envoyer un signal vers une entité externe ou un utilisateur pour obtenir des informations sur le capteur. Une telle information probabiliste donne un niveau de confiance associé au groupement effectué.

Lorsqu'une étape 201 de groupement préalable des capteurs dont la localisation est connue est effectuée, ce groupement préalable peut servir d'initialisation au groupement 203 de l'ensemble des capteurs. Plus précisément, lors du groupement 203 de tous les capteurs, il peut être décidé que les capteurs dont la localisation est connue restent affectés à leurs groupes de départ respectifs. Les capteurs dont la localisation est inconnue peuvent être affectés soit à un groupe initial établi pendant le groupement préalable 201, soit à un groupe nouvellement créé pendant l'algorithme de partitionnement de données de l'étape 203 (par exemple, lorsque le capteur est trop éloigné de tous les groupes initiaux).

Lorsque tous les groupes ont été créés, il est déterminé 204, pour chaque groupe G, si ce groupe contient ou non un capteur dont la localisation est connue.

Cette détermination 204 peut être faite par exemple à partir des identifiants des capteurs. Par exemple, à chaque installation d'un nouveau capteur pour lequel la localisation est renseignée, l'identifiant du capteur et la sous-zone dans laquelle le capteur est situé peuvent être stockés dans une table de correspondance, par exemple dans une mémoire du dispositif qui met en œuvre le procédé de localisation, ou dans une mémoire externe à laquelle le dispositif a accès. Lors de la réception de données issues de ce capteur, le dispositif qui reçoit les données reçoit aussi l'identifiant du capteur, et peut déterminer, à partir de la table de correspondance, si la localisation de ce capteur est connue, et le cas échéant la sous-zone dans laquelle ce capteur se situe.

Si le groupe G comprend au moins un capteur C dont la localisation est connue (« OK » sur la figure 2), l'information de localisation de ce capteur C (i.e. la sous-zone dans laquelle il se situe) est propagée 205 à tous les autres capteurs du groupe dont la localisation est inconnue. Autrement dit, tous les capteurs du groupe G dont la localisation est inconnue sont associés à la sous-zone du capteur C (et donc sont localisés dans la sous-zone correspondant à C).

Il est à noter que l'étape d'initialisation optionnelle 201 assure que deux capteurs C1 et C2 dont les localisations sont connues et ayant deux localisations différentes ne peuvent pas se retrouver dans un même groupe G lors de l'étape de groupement 203.

Lorsque cette étape d'initialisation 201 n'est pas effectuée, il serait en théorie possible que deux capteurs C1 et C2 dont les localisations sont connues et ayant deux localisations différentes se retrouvent dans un même groupe G lors de l'analyse. Pour éviter cela, il est possible, dans un mode de réalisation, d'attribuer des distances particulières aux capteurs dont les localisations sont connues. Par exemple, lorsque l'algorithme de partitionnement de données utilisé à l'étape 203 est basé sur des distances mathématiques, il peut être fixé que la distance entre deux capteurs ayant deux localisations différentes est très grande, et que la distance entre deux capteurs ayant la même localisation soit très petite ou nulle. Dans un autre mode de réalisation, il est possible d'effectuer un test à la fin de l'étape de groupement 203 pour déterminer si un groupe comprend deux capteurs dont les localisations sont connues et différentes. Si c'est le cas, il peut être décidé de redéfinir les sous-zones, ou d'attendre de recevoir des données supplémentaires de la part des capteurs pour relancer l'algorithme de groupement, etc.

Si le groupe G ne comprend aucun capteur dont la localisation est connue (« KO » sur la figure 2), un signal peut être envoyé 206 vers une entité externe (par exemple, un installateur ou un particulier, ou encore un autre système informatique) pour demander une information concernant la localisation d'un capteur du groupe G (qui ne contient donc que des capteurs dont la localisation est inconnue). Si une telle information est reçue 207, alors tous les capteurs du groupe G sont associés à la localisation indiquée dans cette information.

Une fois chaque capteur intégré dans un groupe, une étape optionnelle (non représentée sur la figure 2) vise à vérifier la cohérence des informations de localisation des capteurs. Une entité externe (par exemple, un installateur ou un particulier, ou un autre système informatique) peut notamment modifier la localisation d'un ou plusieurs capteurs si nécessaire (par exemple, pour corriger une erreur du système, ou pour apporter de nouvelles informations plus sûres).

Selon un mode de réalisation, le procédé peut comprendre une étape lors de laquelle il est déterminé 208 si un changement est opéré sur le réseau local auquel les capteurs sont reliés. Ce changement peut correspondre par exemple à la détection d'un nouveau capteur sur le réseau, à une modification de la configuration d'un capteur dans le réseau, à une suppression d'un capteur du réseau, etc. Lorsqu'un tel changement est détecté (« OK »), l'étape 203 de groupement (ainsi que les étapes suivantes) peut être réitérée. Alternativement ou en complément, de nouvelles itérations de l'étape 203 de groupement peuvent être effectuées selon une séquence temporelle prédéterminée.

Les localisations des différents capteurs peuvent être utilisées pour envoyer un signal de commande vers un appareil. Par exemple, une fois que la localisation d'un thermostat est déterminée, il est possible de commander un changement de température en fonction de la température souhaitée dans la sous-zone correspondante.

Les figures 3a et 3b représentent un regroupement de capteurs selon un mode de réalisation possible de l'invention.

Dans l'exemple illustratif de la figure 3a, la zone géographique comprend deux sous-zones 301 et 302, qui représentent ici des pièces d'un appartement. Une porte 303 permet d'accéder à la première pièce 301 et une porte 304 permet d'accéder à la deuxième pièce 302. Une porte communicante 305 permet de passer d'une pièce à l'autre. Chaque pièce comprend deux capteurs de mouvement 306, 307 dans la première pièce et 308, 309 dans la deuxième pièce. Pour chaque pièce, l'un des capteurs 306, 308 est situé à l'entrée de la pièce, à côté de la porte 303, 304. L'autre capteur 307, 309 est situé à une extrémité de la pièce opposée à la porte communicante 305. Un exemple de chemin parcouru par un individu est représenté en traits discontinus sur la figure 3. On suppose que les positions des capteurs 306 et 308 sont connues, et que les positions des capteurs 307 et 309 sont inconnues.

Dans un mode de réalisation, lorsqu'un individu passe à proximité d'un capteur de mouvement 306, 307, 308, 309, le capteur envoie au dispositif de localisation une donnée indiquant qu'il a été activé (notification « ON »). Si le capteur n'est pas réactivé dans un intervalle de temps prédéfini (par exemple 5 secondes), il envoie au dispositif de localisation une donnée indiquant qu'il n'a pas été réactivé (notification « OFF »). Selon un mode de réalisation, il est possible de prendre un capteur dont la localisation est connue comme capteur de référence, par exemple le capteur 306. Chaque donnée (notification « ON » ou « OFF ») peut être associée à un temps respectif (temps d'émission, temps de réception par le dispositif de localisation, etc.). Une notification émise par le capteur de référence 306 est associée à un temps, pris comme temps de référence. Chaque fois qu'une notification est reçue, la différence entre le temps associé au capteur dont provient la notification et le temps de référence est calculée. Les différences peuvent être utilisées pour déterminer des localisations des capteurs 307, 309 dont la localisation est inconnue.

En effet, comme représenté à la figure 3b, les différences temporelles peuvent être placées sur un graphique selon les différentes modalités de la variable considérée (ici « ON / OFF », ou « 1 / 0 ») et l'algorithme de partitionnement peut être utilisé. Le résultat de l'application de l'algorithme de partitionnement est représenté sur la figure 3b par les ellipses 311, 312 en traits discontinus. Les données correspondant au capteur 307 situé dans la même pièce 301 que le capteur de référence 306 sont représentées par des cercles (○), les données correspondant aux capteurs 308, 309 situés dans l'autre pièce 302 sont respectivement représentées par des carrés (□) et des triangles (Δ). Les quatre lignes verticales représentent les quatre combinaisons possibles i/j de notifications (« 1 / 0 » pour « ON / OFF ») où i est la notification correspondant au capteur de référence 306 et j est la notification correspondant à un autre capteur 307, 308, 309. On voit ici sur la figure 3b que l'algorithme de partitionnement a correctement regroupé les notifications du capteur 307 dans un même groupe 312, car les temps séparant les notifications avec le capteur de référence 306 sont proches. L'algorithme de partitionnement a aussi regroupé les autres capteurs 308, 309 dans un même groupe 311, sans pouvoir distinguer les deux capteurs 308 et 309. Le capteur 307 peut alors être associé à la sous-zone 301 (c'est-à-dire celle du capteur de référence 306, dont on sait qu'il appartient à la sous-zone 301), et le capteur 309, qui appartient au même groupe que le capteur 308, peut alors être associé à la sous-zone 302 (c'est-à-dire celle du capteur 308, dont on sait qu'il appartient à la sous-zone 302).

Bien entendu, l'exemple ci-dessus est purement illustratif. La notion de notification « ON / OFF » peut être étendue à toute variable binaire obtenue comme mentionné plus haut à partir d'un capteur, quel que soit le type de capteur, ou à des mesures physiques. Il est aussi possible de réaliser le groupement uniquement à partir des données d'activation (notifications « ON »). N'importe quelle autre configuration de la zone géographique et des sous-zones que celles de la figure 3a sont possibles. De plus, il n'est pas nécessaire de choisir une référence temporelle correspondant à un capteur.

Il existe d'autres modes de réalisation, alternatifs ou complémentaires, pour réaliser le regroupement de capteurs. Il est possible d'obtenir des informations depuis une entité externe permettant de grouper des capteurs. Par exemple, s'il y a une coupure de courant dans certaines pièces d'un bâtiment et que le dispositif de localisation reçoit des données d'un capteur, celui-ci peut éliminer des localisations possibles les pièces concernées par la coupure de courant. Il est aussi possible de corréler des données de même nature, i.e. correspondant à des paramètres physiques similaires. Par exemple, si deux capteurs de température envoient des mesures différentes de température au dispositif, celui-ci peut en déduire que les deux capteurs sont situés dans des sous-zones différentes.

La figure 4 représente un exemple de dispositif de localisation d'un capteur dans un mode de réalisation de l'invention.

Dans ce mode de réalisation, le dispositif 400 comprend une mémoire 405 pour stocker des instructions permettant la mise en œuvre du procédé, les données de mesure reçues, et des données temporaires pour réaliser les différentes étapes du procédé tel que décrit précédemment.

Le dispositif comporte en outre un circuit 404. Ce circuit peut être, par exemple :
- un processeur apte à interpréter des instructions sous la forme de programme informatique, ou
- une carte électronique dont les étapes du procédé de l'invention sont décrites dans le silicium, ou encore
- une puce électronique programmable comme une puce FPGA (pour « Field-Programmable Gate Array » en anglais), comme un SOC (pour « System On Chip » en anglais) ou comme un ASIC (pour « Application Specific Integrated Circuit » an anglais).

Les SOC ou système sur puce sont des systèmes embarqués qui intègrent tous les composants d'un système électronique dans une puce unique.

Un ASIC est un circuit électronique spécialisé qui regroupe des fonctionnalités sur mesure pour une application donnée. Les ASIC sont généralement configurés lors de leur fabrication et ne peuvent être que simulés par l'utilisateur.

Les circuits logiques programmables de type FPGA (Field-Programmable Gate Array) sont des circuits électroniques reconfigurables par l'utilisateur.

Ce dispositif comporte une interface d'entrée 403 pour la réception de données issues des capteurs, et une interface de sortie 406 pour la fourniture de signaux de commande contrôlant un dispositif externe 407. Enfin, le dispositif peut comporter, pour permettre une interaction aisée avec un utilisateur, un écran 401 et un clavier 402. Bien entendu, le clavier est facultatif, notamment lorsque le dispositif correspond à un ordinateur ayant la forme d'une tablette tactile, par exemple.

En fonction du mode de réalisation, le dispositif 400 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc.

En fonction du mode de réalisation, la mémoire, l'unité de stockage de données ou le support de stockage amovible contient des instructions qui, lorsqu'elles sont exécutées par le circuit de commande 404, amènent ce circuit de commande 404 à effectuer ou contrôler les parties interface d'entrée 403, interface de sortie 406, stockage de données dans la mémoire 405 et/ou traitement de données des exemples de mise en œuvre du procédé proposé décrits dans les présentes.

Le circuit de commande 404 peut être un composant implémentant le contrôle des unités 403, 405 et 406 du dispositif 400.

En outre, le dispositif 400 peut être mis en œuvre sous forme logicielle, auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant électronique décrit ci-avant (ex. FPGA, processeur).

Le dispositif 400 peut également utiliser des architectures hybrides, comme par exemple des architectures basées sur un CPU+FPGA, un GPU (Graphics Processing Unit) ou un MPPA (Multi-Purpose Processor Array).

Par ailleurs, le schéma fonctionnel présenté sur la figure 2 est un exemple typique d'un programme dont certaines instructions peuvent être réalisées auprès du dispositif décrit. A ce titre, la figure 2 peut correspondre à l'ordinogramme de l'algorithme général d'un programme informatique au sens de l'invention.

Bien entendu, la présente invention ne se limite pas aux formes de réalisation décrites ci-avant à titre d'exemples ; elle s'étend à d'autres variantes. D'autres réalisations sont possibles.

## Revendications

1. Procédé, mis en œuvre par des moyens informatiques, de localisation de capteurs situés dans une zone géographique, ladite zone géographique étant constituée d'au moins une sous-zone de référence, lesdits capteurs comprenant :
- au moins un premier capteur, chaque premier capteur parmi lesdits au moins un premier capteur étant respectivement associé à une sous-zone parmi lesdites au moins une sous-zone de référence dans laquelle il est situé ; et
- au moins un deuxième capteur, chaque deuxième capteur parmi lesdits au moins un deuxième capteur n'étant associé à aucune sous-zone ;
le procédé comprenant :
a. regrouper lesdits capteurs en une pluralité de groupes à partir de données issues desdits capteurs par un partitionnement desdites données ;
b. pour au moins un groupe de capteurs parmi la pluralité de groupes, déterminer si le groupe comprend ou non un premier capteur ; et
c. si le groupe comprend un premier capteur, associer chaque deuxième capteur du groupe à la sous-zone à laquelle le premier capteur est associé.

2. Procédé selon la revendication 1, dans lequel l'étape c comprend en outre : si le groupe ne comprend aucun premier capteur, émettre un signal relatif à une sous-zone dans laquelle se situe un capteur du groupe de capteurs.

3. Procédé selon l'une des revendications précédentes, comprenant en outre :
d. générer un signal de commande à destination d'un dispositif électronique en fonction d'au moins un capteur et de la sous-zone qui lui est associée.

4. Procédé selon l'une des revendications précédentes, dans lequel, pour un sous-ensemble de données parmi lesdites données issues desdits capteurs, chaque donnée du sous-ensemble est respectivement associée à un temps d'événement, dans lequel le partitionnement desdites données est fonction desdits temps d'événement.

5. Procédé selon la revendication 4, dans lequel au moins une donnée du sous-ensemble de données est issue d'au moins un premier capteur parmi lesdits premiers capteurs, le procédé comprenant en outre :
- sélectionner un capteur de référence parmi lesdits au moins un premier capteur ;
- déterminer des différences entre des temps d'événement associés à des capteurs autres que le capteur de référence et un temps d'événement associé au capteur de référence ;
dans lequel le regroupement des capteurs est effectué en fonction des différences déterminées.

6. Procédé selon l'une des revendications précédentes, dans lequel le regroupement desdits capteurs comprend :
- regrouper lesdits premiers capteurs en une pluralité de premiers groupes, de sorte que tous les premiers capteurs appartenant à un même premier groupe parmi la pluralité de premiers groupes sont associés à une même sous-zone et que deux premiers capteurs parmi lesdits premiers capteurs associés à deux sous-zones respectives différentes n'appartiennent pas à un même premier groupe ;
- en fonction des données issues des capteurs, ajouter un deuxième capteur à un premier groupe parmi lesdits premiers groupes, ou à un groupe créé ne comprenant aucun premier capteur.

7. Procédé selon l'une des revendications précédentes, dans lequel les capteurs de la zone géographique appartiennent à un même réseau local, dans lequel les étapes a à c sont mises en œuvre à chaque détection d'ajout d'un nouveau capteur dans le réseau local et/ou de suppression d'un capteur du réseau local pour lequel des données ont été précédemment reçues.

8. Procédé selon l'une des revendications précédentes, comprenant en outre :
- recevoir un signal de validation ou de rectification d'une appartenance d'un capteur à une sous-zone ;
- mettre à jour les groupes de capteurs et les sous-zones associées aux groupes de capteurs en fonction du signal de validation ou de rectification reçu.

9. Procédé selon l'une des revendications précédentes, dans lequel les données reçues sont associées à des capteurs mesurant des paramètres physiques différents.

10. Dispositif de localisation de capteurs situés dans une zone géographique, ladite zone géographique étant constituée d'au moins une sous-zone de référence, lesdits capteurs comprenant :
- au moins un premier capteur, chaque premier capteur parmi lesdits au moins un premier capteur étant respectivement associé à une sous-zone parmi lesdites au moins une sous-zone de référence dans laquelle il est situé ; et
- au moins un deuxième capteur, chaque deuxième capteur parmi lesdits au moins un deuxième capteur n'étant associé à aucune sous-zone ;
le dispositif comprenant un circuit configuré pour mettre en œuvre un procédé selon l'une quelconque des revendications 1 à 9.

11. Produit programme informatique comportant des instructions pour la mise en œuvre du procédé selon l'une des revendications 1 à 9, lorsque ce programme est exécuté par un processeur.
